(19) Europäisches Patentamt / European Patent Office / Office européen des brevets

(11) **EP 2 188 599 B1**

(12) **EUROPEAN PATENT SPECIFICATION**

(45) Date of publication and mention
of the grant of the patent:
**15.08.2018 Bulletin 2018/33**

(21) Application number: **08806294.8**

(22) Date of filing: **17.09.2008**

(51) Int Cl.:
*G01F 1/74* (2006.01)   *G01F 23/14* (2006.01)
*G01F 1/00* (2006.01)   *G01F 1/66* (2006.01)

(86) International application number:
**PCT/GB2008/003138**

(87) International publication number:
**WO 2009/037434 (26.03.2009 Gazette 2009/13)**

(54) **MEASURING PROPERTIES OF STRATIFIED OR ANNULAR LIQUID FLOWS IN A GAS-LIQUID MIXTURE USING DIFFERENTIAL PRESSURE**

DIFFERENZDRUCKMESSUNG DER EIGENSCHAFTEN GESTREUTER ODER RINGFÖRMIGER FLÜSSIGKEITSFLÜSSE IN EINER GAS-FLÜSSIGKEITS-MISCHUNG

MESURES DES PROPRIÉTÉS D'ÉCOULEMENTS DE LIQUIDE STRATIFIÉS OU ANNULAIRES DANS UN MÉLANGE GAZ-LIQUIDE À L'AIDE DE LA PRESSION DIFFÉRENTIELLE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.09.2007 US 973373 P**

(43) Date of publication of application:
**26.05.2010 Bulletin 2010/21**

(73) Proprietors:
• **Schlumberger Technology B.V.**
**2514 JG The Hague (NL)**
Designated Contracting States:
**BG CZ DE DK GR HU IE IT LT NO PL RO SI SK TR**
• **Schlumberger Holdings Limited**
**Road Town, Tortola (VG)**
Designated Contracting States:
**GB NL**
• **Services Pétroliers Schlumberger**
**75007 Paris (FR)**
Designated Contracting States:
**FR**
• **Prad Research And Development Limited**
**Tortola (VG)**
Designated Contracting States:
**AT BE CH CY EE ES FI GR HR IS LI LU LV MC MT PT SE TR**

(72) Inventor: **ATKINSON, Ian**
**Ely, Cambridgeshire CB7 4FQ (GB)**

(74) Representative: **Schlumberger Intellectual Property Department**
**Parkstraat 83**
**2514 JG Den Haag (NL)**

(56) References cited:
**WO-A-2005/040732   GB-A- 2 238 615**
**GB-A- 2 343 249   US-A- 5 396 807**
**US-A- 5 719 329   US-A1- 2007 157 737**

EP 2 188 599 B1

**Description**

BACKGROUND

This disclosure relates in general to multiphase flow measurement for oil-gas wells and, but not by way of limitation, to accurate measurement of various phases.

Most oil wells ultimately produce both oil and gas from the formation, and often produce water. Consequently, multiphase flow is common in oil wells. Surface monitoring of oil and gas producing wells is tending towards metering multiphase flows with a wide range of gas volume flow fraction (GVF).

There are existing approaches to metering multiphase flows which include separation and mixing approaches. The separation approach provides for splitting the flow into an almost liquid flow plus an almost gas flow flowing in separate conduits and then separately metering the separated flows using single-phase flow meters. The mixing approach attempts to minimize the slip between the different phases so that the velocity and holdup measurements can be simplified.

There are flow meters that measure flow rates in pipes that are intrusive into the flow. By intruding into the flow, the flow can be impeded and sensors can be fouled. Retrofitting pipes with a flow meter is problematic after it is operational. On occasion, the production of hydrocarbons is interrupted in this process.

Methods that are used to measure flow rate in a liquid phase of the multiphase flow make certain presumptions in analyzing the data to arrive at a flow rate. For example, a height of the gas-liquid interface or the speed of sound in the liquid phase might be estimated such that calculations can proceed. By not having accurate information on various parameters a certain amount of error is introduced to these flow rate determinations. US patent publication US 5,396,807 discloses a method and device for determining flow properties of a multiphase mixture flowing through a pipe in a separated flow regime by using a differential pressure measurement across a diameter of the pipe.

GB patent application publication GB 2 343 249 discloses a method and device for determining flow properties of a multiphase mixture flowing through a pipe by measuring the attenuation of leaky acoustic waves transmitted within the pipe wall.

SUMMARY

The present invention provides for a method and a device for determining flow properties of a multiphase mixture according to claims 1 and 6.

Further areas of applicability of the present disclosure will become apparent from the detailed description provided hereinafter.

BRIEF DESCRIPTION OF THE DRAWINGS

The present disclosure is described in conjunction with the appended figures:

FIGs. 1A and 1B depict block diagrams of embodiments of a multiphase flow measurement system;
FIGs. 2A and 2B depict orthographic diagrams of embodiments of a pipe configuration detailing components of the multiphase flow measurement system;
FIGs. 3A and 3B depict cross-sectional plan views of embodiments of the pipe configuration where the cross-section is in a vertical plane generally aligned with flow within the pipeline;
FIGs. 4A-4D depict cross-sectional plan views of embodiments of the pipe configuration where the cross-section is in a plane generally parallel to a gas-liquid interface; and
FIG. 5 illustrates a flowchart of an embodiment of a process for measuring properties of multiphase flow of hydrocarbons within a pipeline.

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

DETAILED DESCRIPTION

Multi-phase flow is commonly produced during hydrocarbon production. The liquid phase can include hydrocarbons, water and/or various contaminants. Some methods rely on one or more ultrasonic transducers that transmit pulses into the liquid phase to determine a height of a gas-liquid interface based upon time-of-flight measurements. Doppler can be used be used to determine the direction and velocity of flow. These measurements use a value for the speed of sound, but some methods estimate a typical value for the speed of sound even though it varies with the make-up of the liquid phase.

In one aspect, pressure sensing is used to find a difference in pressure within the pipeline. The pressure is affected by the make-up of the multiphase flow. The difference in pressure between the bottom and top of the pipeline is used in determining a height of the gas-liquid interface. Essentially, the pressure differential allows weighing the multi-phase flow. Presuming or measuring densities for the gas and liquid flows allows for estimation of the height of the gas-liquid interface.

As described in this application, measurement of flow properties of multiphase mixtures has been of significant importance, especially in the hydrocarbon industries for many years. In this time, many methods and systems have been developed for and considerable time and expense has been put into to development of measuring the flow properties of the phases of a multiphase mixture. In this application, methods and systems are described in which the flow regime of the multiphase mixture flow is controlled, by developing a horizontal stratified flow or developing a swirling stratified flow in a pipe and using a differential pressure sensor to interrogate the flow and, among other things, determine flow properties of the liquid phase, such as liquid phase thickness. This surprising development may lead to the manufacture of lower cost and/or more accurate multiphase flow meters.

In one embodiment of the present invention, the ultrasonic pulsed Doppler transducers are arranged in a Doppler array around the circumference of the pipeline to measure the gas-liquid flow. Additionally, the Doppler array can be used to estimate the water/liquid hydrocarbon ratio (WLR) measurement in some embodiments.

The slip velocity between the liquid and gas phases for a horizontal flow is very different from that for a vertical flow with the same gas volume flow fraction (GVF) value. Normally, the slip in the horizontal case is much larger. This means that even with the same GVF, the liquid holdup in the horizontal case is normally much larger than that in the vertical case. As a result, the flow regime map for horizontal flows is very different from that for vertical flows.

Applicants have determined that liquid holdup is typically 15 times of liquid cut for GVF>0.95 and the liquid flow rate < 3 m$^3$/hr. This means that if the liquid flow rate is 1% of the total flow rate, then the liquid holdup is 15%. Therefore, the gravity separation helps to create a liquid-rich region towards the lower part of a horizontal pipe, and a gas-rich region above it. Knowing the phase distribution in such flows, Applicants submit that various velocity and holdup measurements may be optimized for the different phase regions.

Gas velocity may be measured by using a gas flowmeter, e.g. an ultrasonic gas flowmeter, which may be installed around the appropriate height of the pipe bore to ensure measurement of the gas-only/gas-rich zone. The liquid flow velocity and liquid holdup may be measured by an array of ultrasonic Doppler transducers mounted around the circumference of the pipe. The WLR in the liquid-phase may be further characterized using at least one pair of electromagnetic microwave transmitter and receiver, whose transmission path is mostly covered by the liquid-rich region towards the bottom of the pipe. The flowmeter may be built around a section of straight pipeline and may use non-intrusive sensors, and, therefore, provide no disturbance to the flow.

In one embodiment of the present invention, an ultrasonic clamp-on transit-time gas flowmeter and a range-gated ultrasonic Doppler transducer may be used for the measurement of gas and liquid flow velocities of stratified gas-liquid flow in a horizontal or near horizontal production pipeline. The ultrasonic Doppler transducer may be installed at the pipe underside to measure the flow velocity and thickness (hence volume fraction) of the dominant liquid layer. The liquid-layer thickness may be estimated from a time delay measurement where the range-gated Doppler energy is at a maximum. The gas and liquid flow rates may then be determined from the above gas-liquid velocities and liquid fraction measurements, without intruding into the production flows within the pipeline.

In certain aspects, transit-time (gas) and Doppler (liquid) flow velocity and holdup measurements may also be used to derive the prevalent flow-regime information (from flow-regime maps), hence facilitating the use of a more flow-regime specific correlation of gas-liquid velocity slip for an alternative determination of gas-liquid flow rates. An estimation of the speed of sound in the liquid phase allows the ultrasonic measurements to be more accurate.

In stratified flow regimes, a clamp-on ultrasonic gas flow meter may be used with a pulsed Doppler sensor(s) and/or a microwave EM sensor(s) to measure flow characteristics of a multiphase (gas-liquid) mixture flowing in a pipeline. For such measurements to be accurate and robust, it may be desirable to measure a thickness of the liquid portion of the stratified flow of the gas-liquid as accurately as possible. As such, embodiments of the present invention provide for an independent measure of the liquid layer thickness using a differential pressure measurement that can be used in combination with other ultrasonic measurements. Embodiments of the present invention may be used for flow regimes that are either stratified, such as may be found in near horizontal flows and/or a flow regime comprising a liquid annulus and gas core, such as may be created by inducing a swirling-type of flow in the gas-liquid.

Ultrasonic measurements of flowing liquid layers with velocity, v and thickness h, give for an ultrasonic beam perpendicular to the flow direction:

$$t = \frac{2h}{c_{liquid}},$$

where $t$ = measured delay time, $c_{liquid}$ = liquid sound velocity Doppler: $v(depth=T*c_{liquid}) \propto$ Doppler frequency shift*$c_{liquid}$ where $T$ = gate time Time of flight: $v = v(c_{liquid},h,t)$

Combinations of ultrasonic measurements can give the liquid film velocity, liquid sound velocity and liquid layer thickness. However the interdependency of these parameters makes accurate measurements difficult when presumptions are used as input to the above equations, for example, the speed of sound in the liquid layer. This invention describes an independent measure of the liquid layer thickness using a differential pressure measurement that can be used in combination with various ultrasonic measures. The flow regime is either stratified or a liquid annulus and gas core created by swirling the fluid.

The concept comprises measuring the differential pressure across the diameter of a horizontal pipe in which there is stratified gas-liquid flow or a liquid annulus and gas core induced by swirling the flow. A priori measurements or estimations of the gas and liquid densities allows determination of the liquid layer thickness. Some embodiments could measure the density of the gas and liquid phases with a sensor or make periodic measurements.

An advantage of measuring the differential pressure perpendicular to the flow velocity, as provided in some embodiments of the present invention, is that there is little or no frictional pressure drop to be taken into account in this embodiment.

The differential pressure, $\Delta P$, measured across the diameter, $D$, of a horizontal pipe is:

$$\text{Stratified Flow}: \Delta P = g(h(\rho_{liquid} - \rho_{gas}) + D\rho_{gas})$$
$$\text{Annular Flow}: \Delta P = g(2h(\rho_{liquid} - \rho_{gas}) + D\rho_{gas})$$

The diameter can be measured or may be known for standard pipe sizes. Some embodiments could use the ultrasonic transducer(s) to automatically determine the diameter.

Given the liquid and gas densities, the liquid layer thickness can be determined from the above equations. Merely by way of example, densities of the gas and liquid phases may be automatically determined from radiation count measurements, Venturi type measurements, microwave measurements and/or the like in various embodiments.

If the water-liquid ratio is not known, then an estimate of the liquid density may be provided when WLR = 0.5. Other embodiments could use a determined value for the WLR using EM microwave devices, for example.

The uncertainty in the thickness measurement for an uncertainty in the differential pressure measurement is:

$$\delta h = \frac{\delta \Delta P}{2g\left(\rho_{liquid} - \rho_{gas}\right)}$$

At 10 mbar span the Honeywell STD110 differential pressure sensor has an accuracy of $\pm$ 0.01 mbar; this results in an accuracy of $\sim$ 0.07 mm for h if used for these types of measurements. Other embodiments could use other differential pressure sensors.

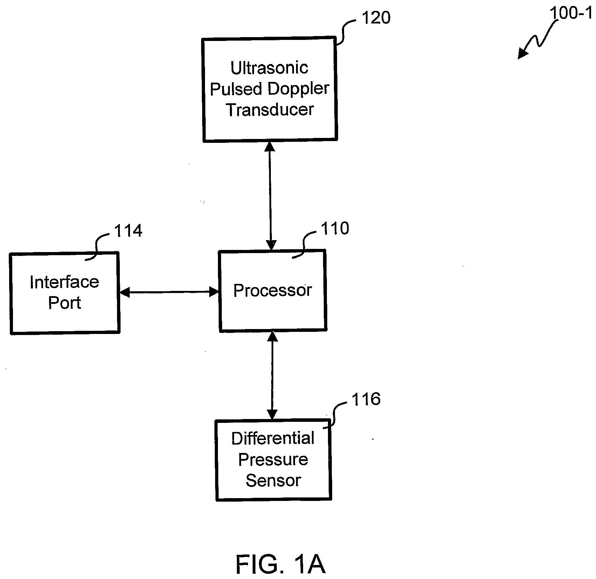

Referring first to **FIG. 1A,** a block diagram of an embodiment of a multiphase flow measurement system 100-1 is shown. The multiphase flow measurement system 100 measures flow of the liquid phase. Among other places in this specification, this embodiment is variously described in at least FIGs. 1A, 2A, 4A and 4C. This embodiment includes an ultrasonic pulsed Doppler transducer 120, a differential pressure sensor 116, a processor 110, and an interface port 114. Once installed, the analysis of the flow can be done automatically without intrusion into the flow within the pipeline.

The ultrasonic pulsed Doppler transducer 120 is range-gated in this embodiment. The Doppler transducer 120 could operate at 1 MHz, for example, to measure flow velocity of the dominant liquid layer. This embodiment clamps the ultrasonic pulsed Doppler transducer 120 on the pipe underside to measure the flow velocity of the dominant liquid layer flowing at the pipe bottom. Additionally, the liquid level or height of the liquid-gas interface can also be determined by the ultrasonic pulsed Doppler transducer 120. The internal cross-sectional area of the pipe can be measured from an ultrasonic pipe-wall thickness gauge, or estimated with readings from the ultrasonic pulsed Doppler transducer 120. The internal cross-sectional area is used with the flow rate measurement to determine the volume of liquid, hydrocarbon and/or gas passing through the pipeline.

The differential pressure sensor 116 attaches to the pipe at two points to measure the difference in pressure between those two points. In this embodiment, one end of the pressure sensor is coupled to the bottom of the horizontally configured pipeline and the other sensor is coupled to the top of the pipeline. The difference in pressure generally corresponds to the weight of the contents within the pipeline. Presuming or measuring densities of the phases, the height of the liquid-gas interface can be determined. Other embodiments could use several pairs of pressure measurements differentially to gather more data points for pressure difference in the pipeline.

A processor 110 is configured with a state machine and/or software to automatically determine certain parameters from the gathered information. Additionally, the various sensors and transducers are driven and read with the processor 110. Gas, liquid and hydrocarbon flow and volume can be determined by the processor 110. Any input or output of the multiphase flow measurement system 100 passes through an interface port 114. Some embodiments could include a display that shows the determined results and measurements, but this embodiment just relays that information out the interface port 114 to a data logging device.

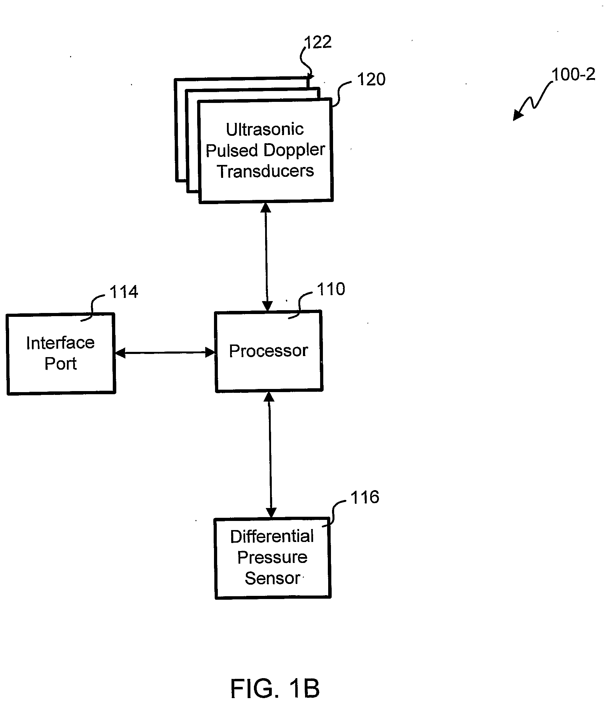

With reference to **FIG. 1B,** a block diagram of another embodiment of the multiphase flow measurement system 100-2 is shown. Among other places in this specification, this embodiment is variously described in at least FIGs. 1B, 2B, 4B and 4D. This embodiment uses multiple ultrasonic pulsed Doppler transducers 120 arranged into a Doppler array 122 to allow more accurate readings than when a single transducer 120 is used as in the embodiment of FIG. 1A. The spatial distribution of the transducers 120 in the Doppler array 122 in some aspects of the present invention may be dense around the lower part of the horizontal pipe to provide better liquid-gas interface detection resolution.

When there is only a film of liquid within the pipe adjacent to a Doppler transducer 120 the reflection is considerably different from the circumstance were the Doppler transducer 120 is adjacent to the liquid phase. The returned Doppler energy level is higher when the Doppler transducer 120 is adjacent to the liquid phase. By noting which Doppler transducers 120 appear to be adjacent to a film rather than the liquid phase, the liquid-gas interface can be further estimated in this embodiment. Further, other ultrasonic transducer readings can be improved by using the Doppler array 122.

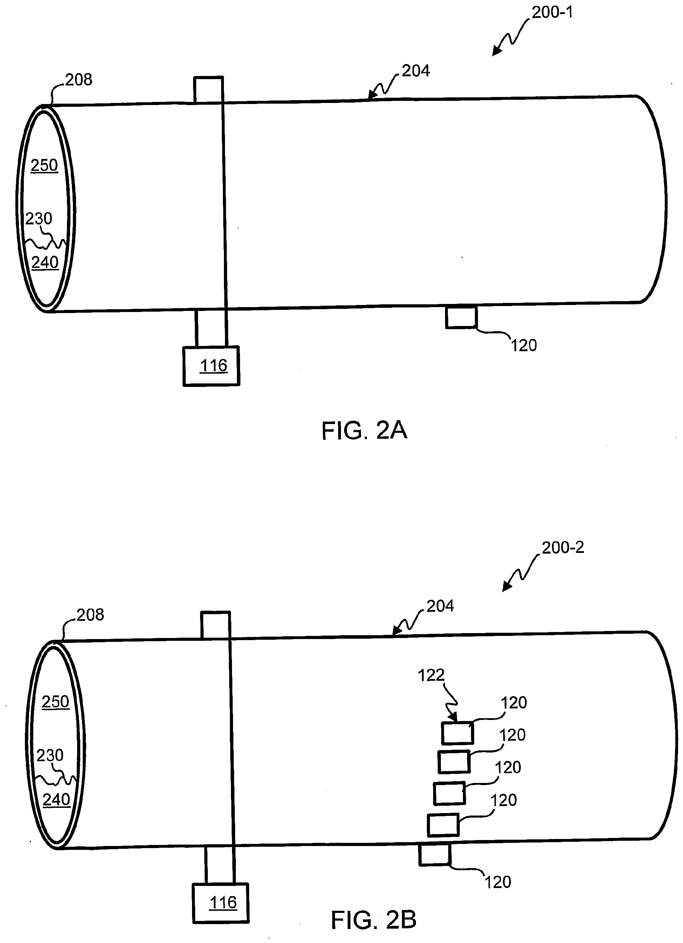

With reference to **FIG. 2A,** an orthographic diagram of an embodiment of a pipe configuration 200-1 is shown that details components of the multiphase flow measurement system 100-1. The pipeline 204 is made from a plastic liner 208 arranged in a cylindrical form. Within the pipeline are a liquid phase 240 and a gas phase 250 separated by a liquid-gas interface. This embodiment uses a single ultrasonic pulsed Doppler transducer 120 located at a bottom of the pipeline 204. The differential pressure sensor 116 is coupled across the pipeline 204 from top to bottom.

Referring next to **FIG. 2B,** an orthographic diagram of another embodiment of a pipe configuration 200-2 is shown that details components of the multiphase flow measurement system 100-2. This embodiment has multiple ultrasonic pulsed Doppler transducers 120 arranged circumferentially on a front of the pipeline 204. Additional ultrasonic pulsed Doppler transducers 120 allow for more accurate readings. Further, the height of the liquid-gas interface can be determined with generally better accuracy when there is a Doppler array 122 arranged about a circumference of the pipeline 204. Although this embodiment arranges the Doppler array 122 on one side of the pipeline 204, other embodiments could arrange the Doppler array 122 circumferentially generally traversing the bottom hemisphere of the pipeline 204.

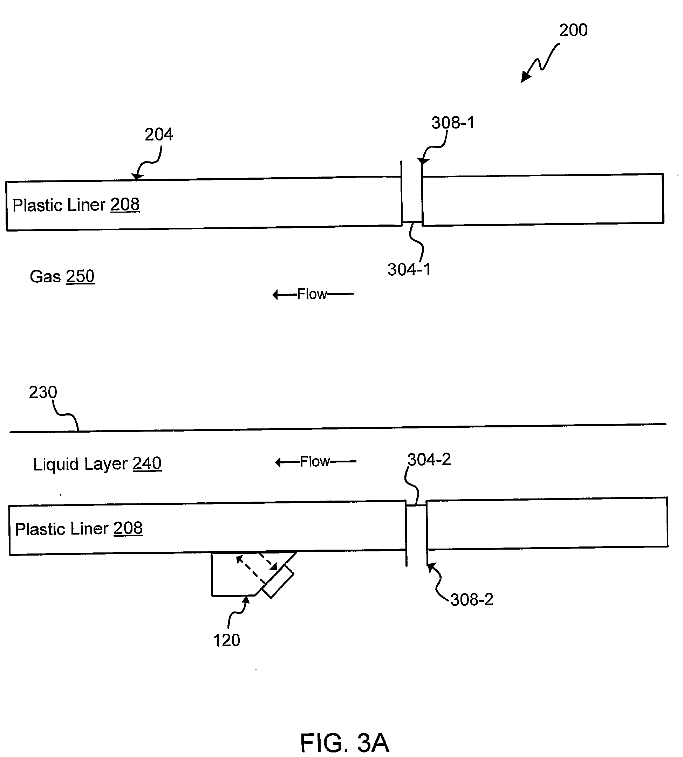

With reference to **FIG. 3A,** a cross-sectional plan view of an embodiment of the pipe configuration 200 is shown where the cross-section is in a vertical plane generally aligned with flow within the pipeline 204. In this embodiment, the multiphase flow is horizontally stratified with the liquid layer 240 at the bottom of the pipeline 204 and the gas phase at the top of the pipeline 204. At the bottom of the plastic liner 208 is a detailed depiction of a ultrasonic pulsed Doppler transducer 120.

A top chamber 308-1 and a bottom chamber 308-2 are each pressure coupled to the interior of the pipeline 204. The chambers 308 are aligned on a vertical diameter to engage the pipeline 204 near the top and bottom. By attaching a tube to each chamber 308 the pressure can be coupled to the differential pressure sensor 116. Each chamber 308 is separated from the contents of the pipeline with a diaphragm 304 suitable as a barrier to keep contamination out of the chamber 308. The chamber and accompanying tube may be filled with an inert gas or a isolation fluid.

Although not shown, some embodiments can increase or decrease an inner diameter of the pipeline 204. Decreasing the inner diameter increases the flow rate, and increasing the inner diameter decreases the flow rate. Various embodiments can add a section with an increased or decreased diameter near the chambers 308.

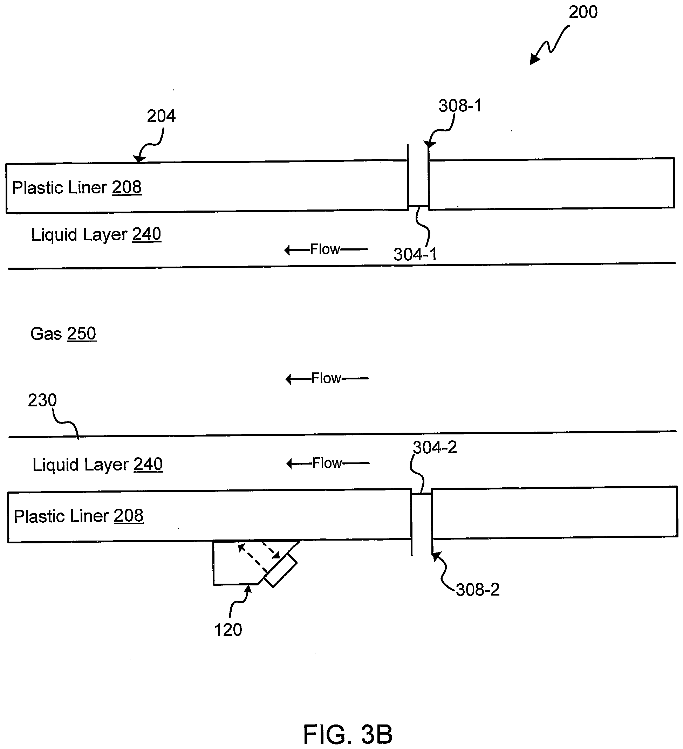

Referring next to **FIG. 3B,** a cross-sectional plan view of an embodiment of the pipe configuration 200 is shown where the cross-section is in a vertical plane generally aligned with flow within the pipeline 204. In this embodiment, the liquid phase is distributed annularly proximate to the interior wall of the pipeline 204. A swirling device can be used to distribute the liquid phase 240 annularly.

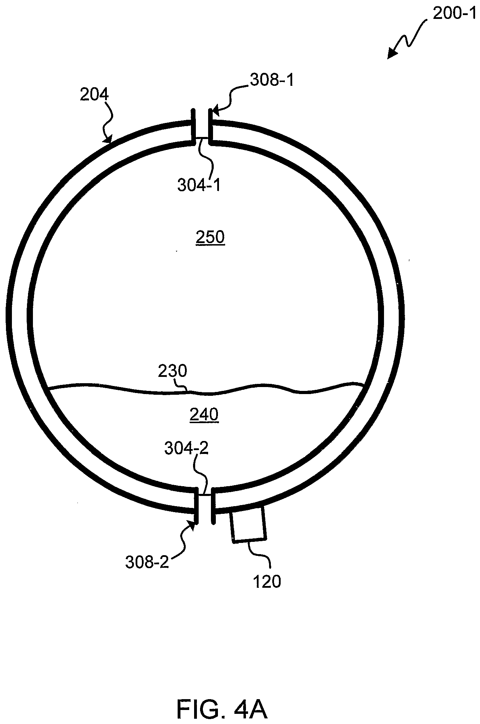

With reference to **FIG. 4A,** a cross-sectional plan view of an embodiment of the pipe configuration 200-1 is shown where the cross-section is in a plane generally perpendicular to flow within the pipe 204. Only some of the multiphase flow measurement system 100-1 is shown in this view. The ultrasonic pulsed Doppler transducer 120 is shown at the bottom of the pipeline 204 to measure the flow of the liquid phase 240 among other things. The chambers 308 that are pressure coupled to the interior of the pipeline 204 is also shown. Each chamber 308 has a diaphragm 304 to prevent fouling of the tubes coupling the chambers to the differential pressure sensor 116.

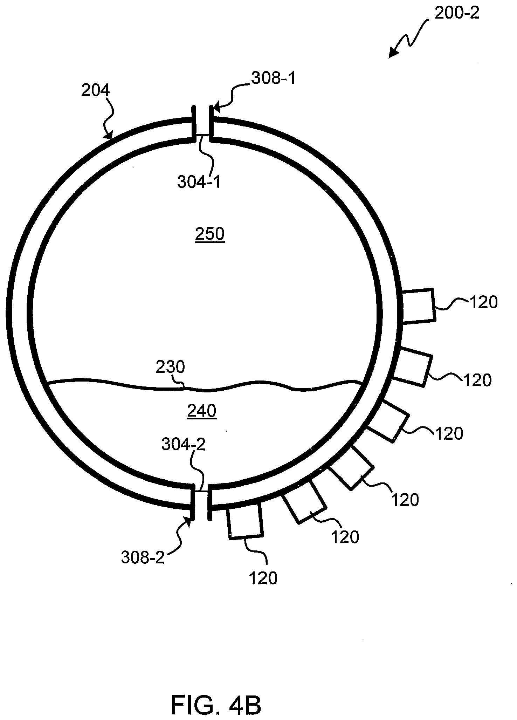

Referring next to **FIG. 4B,** a cross-sectional plan view of another embodiment of the pipe configuration 200-2 is shown where the cross-section is in a plane generally perpendicular to flow within the pipe 204. This view shows the Doppler array 122 of the multiphase flow measurement system 100-2. Six ultrasonic pulsed Doppler transducers 120 are used in this embodiment. The fifth and sixth ultrasonic pulsed Doppler transducers 120 are above the gas-liquid interface 230 and the fourth ultrasonic pulsed Doppler transducers 120-4 is below. By analysis of the readings from these transducers 120, the processor can determine that the gas-liquid interface 230 is between the fourth and fifth transducers. Further, other transducers below the gas-liquid interface 230 can estimate the height using reflections from the pulses. The differential pressure sensor 116 can also be used to estimate the height of the gas-liquid interface 230.

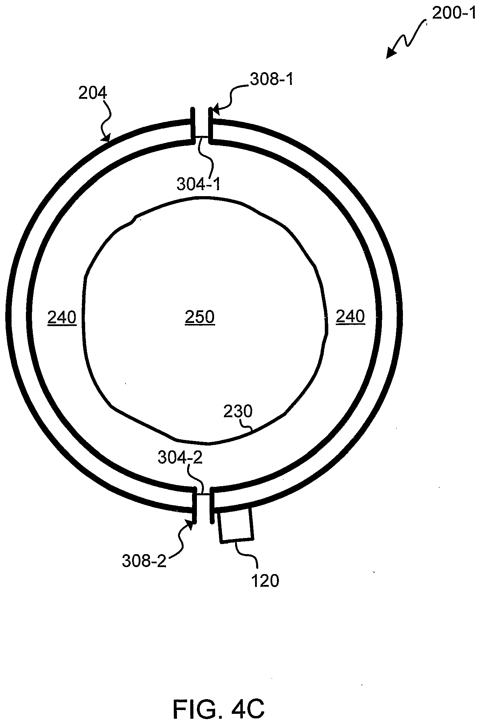

With reference to **FIG. 4C,** a cross-sectional plan view of still another embodiment of the pipe configuration 200-1 is shown where the cross-section is in a plane generally perpendicular to flow within the pipe 204. The multiphase flow in this embodiment is annular. Differential pressure sensing and a single pulsed Doppler transducer 120 are used in this embodiment to analyze the multiphase flow. A swirling device is inserted into the pipeline to create the annular flow.

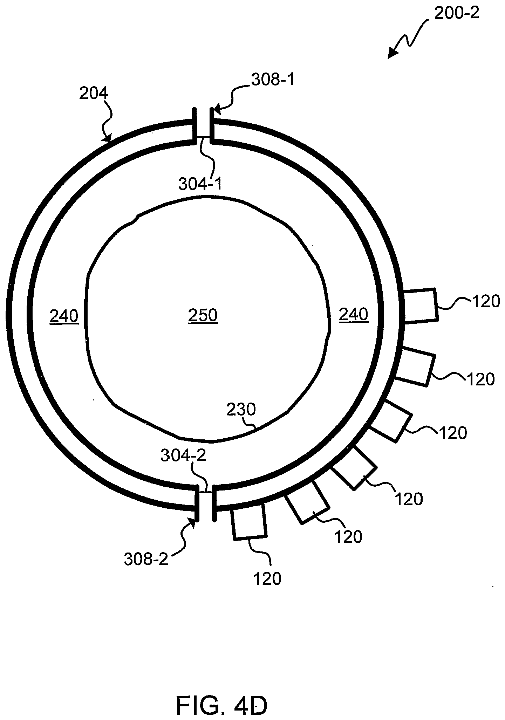

Referring next to **FIG. 4D,** a cross-sectional plan view of yet another embodiment of the pipe configuration 200-2 is shown where the cross-section is in a plane generally perpendicular to flow within the pipe 204. Like the embodiment of FIG. 4C, this embodiment uses an annular flow. This embodiment uses a Doppler array 122 along with the differential pressure sensor 116 to analyze the multiphase flow.

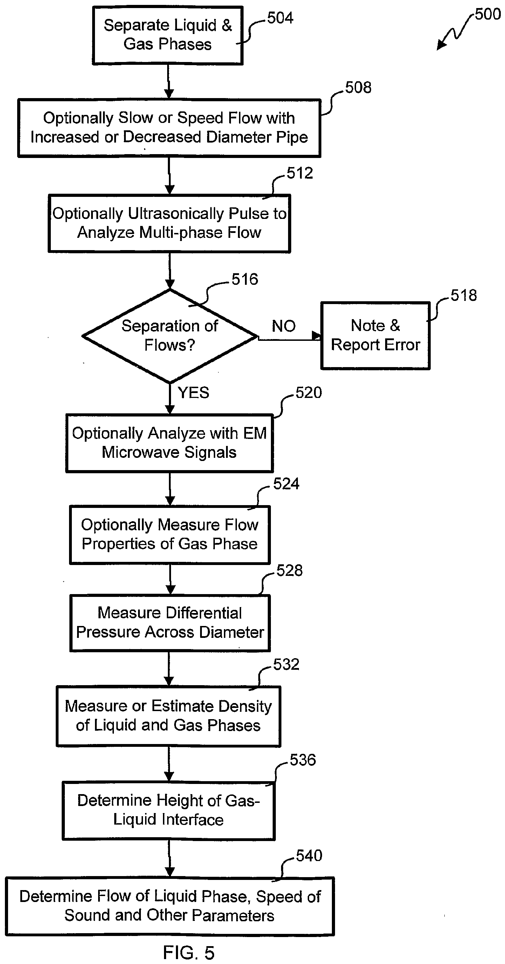

With reference to **FIG. 5,** a flowchart of an embodiment of a process 500 for measuring properties of multiphase flow of hydrocarbons within a pipeline 204 is shown. The depicted portion of the process begins in block 504 where the liquid and gas phases 240, 250 are stratified. A horizontal section of pipe 204 can be used to stratify, or a mixing element can be introduced to swirl the flow annularly. The speed of the flow can be optionally increased or decreased by adding a section with a larger or smaller diameter in block 508.

The ultrasonic pulsed Doppler transducer(s) 120 can optionally measure the flow of the liquid phase 240 in block 512. Additionally, the ultrasonic pulsed Doppler transducer(s) 120 can optionally measure the height of the gas-liquid interface 230 using reflections, the estimated speed of sound and/or by noticing which transducers 120 in a Doppler array 122 appear to not be submerged. Additionally, the WLR can be optionally determined by an analysis of readings from the ultrasonic pulsed Doppler transducer(s) 120.

The Doppler transducer(s) 120 allow confirmation of stratified flow in block 516. Where a separated flow regime cannot be confirmed, processing goes to block 518 where the error is noted and reported. Other measurements may be taken where there is not a separated flow regime. Where separated flows are determined in block 516, processing goes to block 520.

EM microwave elements could be optionally used in block 520 for an estimate of WLR. In block 524, a gas flowmeter can optionally measure the velocity of the gas phase 250. In step 528, the differential pressure between the chambers 308 is measured by the differential pressure sensor 116. The density of the gas and/or liquid phases can be measured with dosimeters in block 532. Other embodiments could use experimentation, prior knowledge and modeling to find densities of the gas and liquid phases.

The processor 110 in block 536 determines the height of the gas-liquid interface 230 using the differential pressure, the density of the gas layer, and/or the density of the liquid layer. In block 540, the flow rate, speed of sound in the liquid phase and other parameters can be further determined. Determined information may be relayed to other systems through the interface port 114 and/or displayed.

A number of variations and modifications of the disclosed embodiments can also be used. For example, the various flowmeters, arrays, transducers, sensors, transmitters, and receivers can be combined in various ways for a given multiphase flow measurement system. Additionally, the number of sensors, probes and transducers can be different in various embodiments. For example, several differential pressure sensors could be used to more accurately weigh the flow. Above embodiments are discussed in the context of hydrocarbon transport, but the invention need not be limited to hydrocarbons.

**Claims**

1. A method for determining flow properties of a multiphase mixture, the method comprising steps of:

flowing the multiphase mixture through a section of pipe (204) in a phase separated flow regime, wherein the phase separated flow regime comprises a flow of the multiphase mixture in which a liquid phase (240) of the multiphase mixture and a gas phase (250) of the multiphase mixture are separated;
measuring a differential pressure across a diameter of the section of pipe (204); and
using a density of the gas phase, a density of the liquid phase and the measured differential pressure to determine a liquid layer thickness of the liquid phase (240) of the multiphase mixture flowing in the section of pipe, **characterised in that** it further comprises, after the first step of flowing the multiphase mixture through a section of pipe in a phase separated flow regime, the step of using one or more ultrasonic transducers (120) to determine when the multiphase mixture is flowing through the pipe in the phase separated flow regime.

2. The method as recited in claim 1, wherein the phase separated flow regime is a stratified flow or an annular flow.

3. The method as recited in claim 1 or claim 2, further comprising a step of determining that the differential pressure measurements are valid when the phase separated flow regime is determined.

4. The method as recited in any one of claims 1 to 3, wherein the multiphase mixture includes hydrocarbons, further comprising
measuring a gas velocity and/or a liquid velocity of the separated flow without intruding into the separated flow; and calculating liquid flow within the pipe using the gas velocity and/or the liquid velocity and the height.

5. The method as recited in any one of claims 1 to 4, further comprising steps of:

emitting an ultrasonic beam into the pipe;
receiving at a detection location a reflected ultrasonic beam, wherein the reflected ultrasonic beam is a reflection of the emitted ultrasonic beam from an interface (230) between the liquid phase of the multiphase mixture and the gas phase of the multiphase mixture;

measuring a time of flight for the ultrasonic beam to travel to the interface (230) and back to the detection location; and
processing a speed of sound from the liquid layer thickness and the time of flight, wherein the speed of sound is a speed of sound in the liquid phase (240) of the multiphase mixture.

6. A system for measuring flow properties of a multiphase mixture in a pipe (204), the system comprising:

the pipe (204) which is configured to transport the multiphase mixture that flows through the pipe in a phase separated flow regime which separates the flow into a liquid phase (240) of the multiphase mixture and a gas phase (250) of the multiphase mixture,
a differential pressure sensor (116) configured to operatively engage with the pipe at two points across a diameter of the pipe, and to measure a difference in pressure between the two points;
a processor (110) configured to determine a liquid layer thickness of the liquid phase (240) of the multiphase mixture flowing in the pipe using a density of the gas phase, (250) a density of the liquid phase and the difference in pressure; **characterised in that** it further comprises one or more ultrasonic transducers (120) to determine when the multiphase mixture is flowing through the pipe in the phase separated flow regime.

7. The system as recited in claim 6, wherein the pipe comprises a horizontal section, wherein the phase separated flow regime is a stratified flow, and wherein the stratified flow is generated by flowing the multiphase mixture through the horizontal section of the pipe.

8. The system as recited in claim 7, wherein the horizontal section of the pipe includes a section with an expanded internal diameter to provide for reducing a flow rate of the multiphase mixture.

9. The system as recited in claim 6, comprising a swirling device to distribute the liquid phase annularly.

10. The system as recited in claim 9, wherein the pipe comprises a constriction after the swirling device, configured so that the swirling multiphase mixture is passed through the constriction in the pipe.

11. The system as recited in any one of claims 6 to 10 further comprising
one or more ultrasonic transducers (120) coupled with a horizontal section of pipe and configured to determine whether the flow of the multiphase mixture is stratified.

12. The system of any one of claims 6 to 10 further comprising a plurality of transit-time ultrasonic elements (120) to measure the gas phase and/or liquid phase velocity.

13. The system as recited in any one of claims 6 to 10, further comprising
an ultrasonic transducer (120) configured to:

emit an ultrasonic beam into the pipe (204) and receive at a detection location a reflected ultrasonic beam, wherein the reflected ultrasonic beam is a reflection of the emitted ultrasonic beam from an interface (230) between the liquid phase (240) of the multiphase mixture and the gas phase (250) of the multiphase mixture;
measure a time of flight for the ultrasonic beam to travel to the interface (230) and back to the detection location; and
process a speed of sound from the liquid layer thickness and the time of flight, wherein the speed of sound is a speed of sound in the liquid phase (240) of the multiphase mixture.

14. The system as recited in claim 13, wherein:

the pipe is arranged horizontally to stratify the multiphase mixture,
the ultrasonic transducer is a pulsed Doppler transducer (120), and
the pulsed Doppler transducer operatively engages a lower half of the pipe below a horizontal plane aligned with the middle line of the pipe.

**Patentansprüche**

1. Verfahren zum Ermitteln von Strömungseigenschaften eines Mehrphasengemischs, wobei das Verfahren die Schritte umfasst:

Strömenlassen des Mehrphasengemischs durch einen Abschnitt eines Rohrs (204) in einem phasengetrennten Strömungsregime, wobei das phasengetrennte Strömungsregime einen Strom des Mehrphasengemischs umfasst, in welchem eine Flüssigphase (240) des Mehrphasengemischs und eine Gasphase (250) des Mehrphasengemischs getrennt sind;
Messen eines Differenzdrucks über einen Durchmesser des Abschnitts des Rohrs (204); und
Verwenden einer Dichte der Gasphase, einer Dichte der Flüssigphase und des gemessenen Differenzdrucks, um eine Flüssigkeitsschichtdicke der Flüssigphase (240) des im Rohrabschnitt strömenden Mehrphasengemischs zu ermitteln, **dadurch gekennzeichnet, dass** es, nach dem ersten Schritt des Strömenlassens des Mehrphasengemischs durch einen Rohrabschnitt in einem phasengetrennten Strömungsregime, ferner den Schritt eines Verwendens eines oder mehrerer Ultraschallwandler (120), um zu ermitteln, wann das Mehrphasengemisch im phasengetrennten Strömungsregime durch das Rohr strömt, umfasst.

2. Verfahren gemäß Anspruch 1, wobei das phasengetrennte Strömungsregime eine Schichtenströmung oder eine Ringströmung ist.

3. Verfahren gemäß Anspruch 1 oder Anspruch 2, ferner umfassend einen Schritt des Ermitteins, dass die Differenzdruckmessungen gültig sind, wenn das phasengetrennte Strömungsregime ermittelt wird.

4. Verfahren gemäß einem der Ansprüche 1 bis 3, wobei das Mehrphasengemisch Kohlenwasserstoffe beinhaltet, ferner umfassend
Messen einer Gasgeschwindigkeit und/oder einer Flüssigkeitsgeschwindigkeit der getrennten Strömung, ohne in die getrennte Strömung einzudringen; und
Berechnen der Flüssigkeitsströmung innerhalb des Rohrs unter Verwendung der Gasgeschwindigkeit und/oder der Flüssigkeitsgeschwindigkeit und der Höhe.

5. Verfahren gemäß einem der Ansprüche 1 bis 4, das ferner die Schritte umfasst:

Emittieren eines Ultraschallstrahls in das Rohr;
Empfangen eines reflektierten Ultraschallstrahls an einer Detektionsstelle, wobei der reflektierte Ultraschallstrahl eine Reflexion des emittierten Ultraschallstrahls von einer Grenzfläche (230) zwischen der Flüssigphase des Mehrphasengemischs und der Gasphase des Mehrphasengemischs ist;
Messen einer Flugzeit des Ultraschallstrahls zur Grenzfläche (230) und zurück zur Detektionsstelle; und
Verarbeiten einer Schallgeschwindigkeit aus der Flüssigkeitsschichtdicke und der Flugzeit, wobei die Schallgeschwindigkeit eine Geschwindigkeit des Schalls in der Flüssigphase (240) des Mehrphasengemischs ist.

6. System zum Messen von Strömungseigenschaften eines Mehrphasengemischs in einem Rohr (204), wobei das System umfasst:

das Rohr (204), das dazu ausgelegt ist, das Mehrphasengemisch zu transportieren, welches das Rohr in einem phasengetrennten Strömungsregime, das die Strömung in eine Flüssigphase (240) des Mehrphasengemischs und eine Gasphase (250) des Mehrphasengemischs trennt, durchströmt,
einen Differenzdrucksensor (116), der dazu ausgelegt ist, mit dem Rohr an zwei Stellen über einen Durchmesser des Rohrs funktional in Eingriff zu stehen und eine Druckdifferenz zwischen den zwei Stellen zu messen;
einen Prozessor (110), der dazu ausgelegt ist, eine Flüssigkeitsschichtdicke der Flüssigphase (240) des im Rohr strömenden Mehrphasengemischs unter Verwendung einer Dichte der Gasphase, (250) einer Dichte der Flüssigphase und der Druckdifferenz zu ermitteln;
**dadurch gekennzeichnet, dass** es ferner ein oder mehrere Ultraschallwandler (120) umfasst, um zu ermitteln, wann das Mehrphasengemisch im phasengetrennten Strömungsregime durch das Rohr strömt.

7. System gemäß Anspruch 6, wobei das Rohr einen horizontalen Abschnitt umfasst, wobei das phasengetrennte Strömungsregime eine Schichtenströmung ist und wobei die Schichtenströmung durch Strömenlassen des Mehrphasengemischs durch den horizontalen Abschnitt des Rohrs erzeugt wird.

8. System gemäß Anspruch 7, wobei der horizontale Abschnitt des Rohrs einen Abschnitt mit einem erweiterten Innendurchmesser beinhaltet, um eine Strömungsrate des Mehrphasengemischs zu reduzieren.

9. System gemäß Anspruch 6, mit einer Verwirbelungsvorrichtung, um die Flüssigphase ringförmig zu verteilen.

10. System gemäß Anspruch 9, wobei das Rohr eine Einschnürung nach der Verwirbelungsvorrichtung umfasst, so ausgestaltet, dass das wirbelnde Mehrphasengemisch durch die Einschnürung im Rohr geleitet wird.

11. System gemäß einem der Ansprüche 6 bis 10, ferner umfassend einen oder mehrere Ultraschallwandler (120), die mit einem horizontalen Rohrabschnitt gekoppelt sind und dazu ausgelegt sind, zu ermitteln, ob die Strömung des Mehrphasengemischs geschichtet ist.

12. System nach einem der Ansprüche 6 bis 10, ferner umfassend eine Mehrzahl von Laufzeit-Ultraschallelementen (120), um die Gasphasen- und/oder Flüssigphasengeschwindigkeit zu messen.

13. System gemäß einem der Ansprüche 6 bis 10, ferner umfassend einen Ultraschallwandler (120), der ausgelegt ist zum:

Emittieren eines Ultraschallstrahls in das Rohr (204) und Empfangen eines reflektierten Ultraschallstrahls an einer Detektionsstelle, wobei der reflektierte Ultraschallstrahl eine Reflexion des emittierten Ultraschallstrahls von einer Grenzfläche (230) zwischen der Flüssigphase (240) des Mehrphasengemischs und der Gasphase (250) des Mehrphasengemischs ist; Messen einer Flugzeit, die der Ultraschallstrahl benötigt, um sich zur Grenzfläche (230) hin und zur Detektionsstelle zurück zu bewegen; und Verarbeiten einer Schallgeschwindigkeit aus der Flüssigkeitsschichtdicke und der Flugzeit, wobei die Schallgeschwindigkeit eine Geschwindigkeit des Schalls in der Flüssigphase (240) des Mehrphasengemischs ist.

**14.** System gemäß Anspruch 13, wobei:

das Rohr horizontal angeordnet ist, um das Mehrphasengemisch zu schichten, der Ultraschallwandler ein gepulster Doppler-Wandler (120) ist, und der gepulste Doppler-Wandler mit einer unteren Hälfte des Rohrs unterhalb einer mit der Mittellinie des Rohrs ausgerichteten horizontalen Ebene funktional in Eingriff steht.

**Revendications**

**1.** Un procédé de détermination des propriétés d'écoulement d'un mélange multiphase, le procédé comprenant les étapes suivantes :

faire passer le mélange multiphase à travers une section de conduite (204) dans un régime d'écoulement à phases séparées, dans lequel le régime d'écoulement à phases séparées comprend un écoulement du mélange multiphase où une phase liquide (240) du mélange multiphase et une phase gazeuse (250) du mélange multiphase sont séparées ; mesurer la pression différentielle à travers le diamètre de la section de conduite (204) ; et utiliser la densité de la phase gazeuse, la densité de la phase liquide et la pression différentielle mesurée pour déterminer l'épaisseur de couche liquide de la phase liquide (240) du mélange multiphase dans la section de conduite, **caractérisé en ce qu'**il comprend en outre, après la première étape consistant à faire passer le mélange multiphase à travers une section de conduite dans un régime d'écoulement à phases séparées, l'étape consistant à utiliser une ou plusieurs transducteurs ultrasonores (120) pour déterminer quand le mélange multiphase s'écoule à travers la conduite dans le régime d'écoulement à phases séparées.

**2.** Le procédé selon la revendication 1, dans lequel le régime d'écoulement à phases séparées est un écoulement stratifié ou un écoulement annulaire.

**3.** Le procédé selon la revendication 1 ou la revendication 2, comprenant en outre une étape consistant à déterminer que les mesures de la pression différentielle sont valides lorsque le régime d'écoulement à phases séparées est déterminé.

**4.** Le procédé selon l'une quelconque des revendications 1 à 3, dans lequel le mélange multiphase inclut des hydrocarbures, consistant en outre à :

mesurer la vitesse du gaz et/ou la vitesse du liquide de l'écoulement séparé sans intrusion dans l'écoulement séparé ; et calculer l'écoulement de liquide à l'intérieur de la conduite au moyen de la vitesse du gaz et/ou la vitesse du liquide et de la hauteur.

**5.** Le procédé selon l'une quelconque des revendications 1 à 4, comprenant les étapes consistant à :

émettre un faisceau ultrasonore dans la conduite ; recevoir à un point de détection un faisceau ultrasonore réfléchi, dans lequel le faisceau ultrasonore réfléchi est une réflexion du faisceau ultrasonore émis à partir d'une interface (230) entre la phase liquide du mélange multiphase et la phase gazeuse du mélange multiphase ; mesurer la durée de trajet pour l'arrivée du faisceau ultrasonore à l'interface (230) et son retour au point de détection ; traiter la vitesse du son à partir de la couche liquide et la durée de trajet, dans lequel la vitesse du son est la vitesse du son dans la phase liquide (240) du mélange multiphase.

**6.** Un système de mesure des propriétés d'écoulement d'un mélange dans une conduite (204), le système comprenant :

la conduite (204) qui est configurée pour transporter le mélange multiphase qui s'écoule à travers la conduite dans un régime d'écoulement à phases séparées qui sépare le flux en une phase liquide (240) du mélange multiphase et une phase gazeuse (250) du mélange multiphase,

un capteur de pression différentielle (116) configuré pour s'engager fonctionnellement avec le pipeline à deux points au travers du diamètre du pipeline et mesurer la différence de pression entre les deux points ;

un processeur (110) configuré pour déterminer une épaisseur de couche liquide de la phase liquide (240) du mélange multiphase s'écoulant dans le pipeline au moyen de la densité de la phase gazeuse (250), de la densité de la phase liquide et de la pression différentielle ;

**caractérisé en ce qu'**il comprend en outre un ou plusieurs transducteurs ultrasonores (120) pour déterminer quand le mélange multiphase s'écoule à travers la conduite dans le régime d'écoulement à phases séparées.

7. Le système selon la revendication 6, dans lequel la conduite comprend une section horizontale, où le régime d'écoulement à phases séparées est un écoulement stratifié et dans lequel l'écoulement stratifié est généré par l'écoulement du mélange multiphase à travers la section horizontale de la conduite.

8. Le système selon la revendication 7, dans lequel la section horizontale de la conduite comprend une section à diamètre intérieur élargi pour permettre de réduire le débit du mélange multiphase .

9. Le système selon la revendication 6, comprenant un dispositif de tourbillonnage pour assurer une distribution annulaire de la phase liquide.

10. Le système selon la revendication 9, dans lequel la conduite comprend un étranglement après le dispositif de tourbillonnage, configuré de manière à ce que le mélange multiphase tourbillonnant passe à travers l'étranglement dans le tube.

11. Le système selon l'une quelconque des revendications 6 à 10 comprenant en outre un ou plusieurs transducteurs ultrasonores (120) accouplés à une section horizontale de conduite et configuré pour déterminer si l'écoulement du mélange multiphase est stratifié .

12. Le système selon l'une quelconque des revendications 6 à 10 comprenant en outre une pluralité d'éléments ultrasoniques basés sur le temps de transit (120) pour mesurer la vitesse de la phase gazeuse et/ou de la phase liquide.

13. Le système selon l'une quelconque des revendications 6 à 10, comprenant en outre un transducteur ultrasonore (120) configuré pour :

émettre un faisceau ultrasonore dans la conduite (204) et recevoir à un point de détection un faisceau ultrasonore réfléchi, dans lequel le faisceau ultrasonore réfléchi est une réflexion du faisceau ultrasonore émis à partir d'une interface (230) entre la phase liquide (240) du mélange multiphase et la phase gazeuse (250) du mélange multiphase ;

mesurer la durée de trajet pour l'arrivée du faisceau ultrasonore à l'interface (230) et son retour au point de détection ; et

traiter la vitesse du son à partir de la couche liquide et la durée de trajet, dans lequel la vitesse du son est la vitesse du son dans la phase liquide (240) du mélange multiphase.

14. Le système selon la revendication 13, dans lequel :

la conduite est disposée horizontalement afin de stratifier le mélange multiphase,

le transducteur ultrasonore est un transducteur Doppler pulsé (120), et

le transducteur Doppler pulsé s'engage fonctionnellement avec la moitié inférieure de la conduite en dessous d'un plan horizontal aligné avec la ligne médiane de la conduite.

120

100-1

Ultrasonic
Pulsed Doppler
Transducer

114

110

Interface
Port

Processor

116

Differential
Pressure
Sensor

FIG. 1A

122

120

Ultrasonic
Pulsed Doppler
Transducers

100-2

114

Interface
Port

110

Processor

116

Differential
Pressure
Sensor

FIG. 1B

FIG. 2A

FIG. 2B

200

308-1

204

Plastic Liner 208

Gas 250

304-1

←—Flow——

230

Liquid Layer 240          ←—Flow——          304-2

Plastic Liner 208

120

308-2

FIG. 3A

200

204

308-1

Plastic Liner 208

Liquid Layer 240

←—Flow—— 304-1

Gas 250

←—Flow——

230

Liquid Layer 240 ←—Flow——

304-2

Plastic Liner 208

308-2

120

FIG. 3B

FIG. 4A

FIG. 4B

200-1

204

308-1

304-1

240    250    240

230

304-2

308-2

120

**FIG. 4C**

FIG. 4D

500

Separate Liquid &
Gas Phases ⌐504

Optionally Slow or Speed Flow with
Increased or Decreased Diameter Pipe ⌐508

Optionally Ultrasonically Pulse to
Analyze Multi-phase Flow ⌐512

Separation of
Flows? ⌐516 → NO → Note &
Report Error ⌐518

YES

Optionally Analyze with EM
Microwave Signals ⌐520

Optionally Measure Flow
Properties of Gas Phase ⌐524

Measure Differential
Pressure Across Diameter ⌐528

Measure or Estimate Density
of Liquid and Gas Phases ⌐532

Determine Height of Gas-
Liquid Interface ⌐536

Determine Flow of Liquid Phase, Speed of
Sound and Other Parameters ⌐540

FIG. 5

**EP 2 188 599 B1**

**Patent documents cited in the description**

- US 5396807 A
- GB 2343249 A